# EUROPEAN PATENT SPECIFICATION

(11) **EP 3 066 933 B1**
(45) Date of publication and mention of the grant of the patent: **26.12.2018**
(21) Application number: 16159811.5
(22) Date of filing: 11.03.2016
(51) Int. Cl.: A23C 13/08

(54) **A METHOD FOR THE PRODUCTION OF UHT CREAM**
VERFAHREN ZUR HERSTELLUNG VON UHT-SAHNE
PROCÉDÉ POUR LA PRODUCTION DE CRÈME UHT

(30) Priority: 11.03.2015 IT UB20150046
(43) Date of publication of application: 14.09.2016
(73) Proprietor: Pascal S.r.l., 10028 Trofarello (Torino) (IT)
(72) Inventor: BRANCIAROLI, Osvaldo, I-10028 Trofarello (Torino) (IT)
(74) Representative: Marchitelli, Mauro

(56) References cited:
- EP-A2- 0 167 994
- DE-A1- 3 347 465
- GB-A- 1 119 510
- W H Stroup ET AL: "Steam Infusion Heater For Ultra High- Temperature Pasteurization", Journal of Dairy Science, Vol. 55, Issue 4, 30 April 1971 (1971-04-30), pages 536-539, XP055214383, DOI: http://dx.doi.org/10.3168/jds.S0022-0302(7 2)85530-9 Retrieved from the Internet: URL:http://www.journalofdairyscience.org/a rticle/S0022-0302%2872%2985530-9/pdf [retrieved on 2015-09-18]
- DE JONG P ET AL: "Reduction of fouling and contamination by predictive kinetic models", INTERNATIONAL DAIRY JOURNAL, ELSEVIER APPLIED SCIENCE, BARKING, GB, vol. 12, no. 2-3, 1 January 2002 (2002-01-01), pages 285-292, XP027377916, ISSN: 0958-6946 [retrieved on 2002-01-01]

## Description

### Field of the invention

The present invention relates to a method for producing UHT cream with a preservation time longer than six months.

### Description of the prior art

The production of UHT cream requires a sterilization step at a temperature of 140-150°C. The technologies used for sterilizing cream can be grouped into three categories:
- heating in plate- or pipe- heat exchangers;
- direct injection of steam;
- infusion heating

Regarding the heating in plate- or pipe- heat exchangers, the cream is in direct contact with surfaces at a high temperature, which leads to damage of the product and a worsening of the organoleptic characteristics of the cream. DE-A-3347465 discloses an example of sterilizing by heating in plate-heat exchangers. EP-A-0167994 discloses an example of indirect heating sterilization method.

Sterilization by direct injection of steam into the product is a fairly common technique in the food industry, and is also used in some plants for producing milk-based products. An example of such procedure is disclosed in GB-A-1119510. The steam is injected into pipes in which the product to be sterilized flows. The direct injection of steam tends to produce turbulence of the product and friction with the pipe walls. This technique is also poorly suited for producing UHT cream of high quality because it tends to worsen the organoleptic characteristics of the product. The scientific publication De Jong et al., "Reduction of fouling and contamination by predictive kinetic models" International Dairy Journal (2002) 12:285-292 discloses a predictive model to optimize product production process in relation to the desired product quality and safety.

The technique that allows the best results to be obtained from a product-quality point of view is sterilization by means of infusion. The scientific publication Stroup et al., "Steam Infusion Heater For Ultra High-Temperature Pasteurization" Journal of Dairy Science, (1971) 55 (4) :536-539 discloses a plant for sterilization by infusion. The infusers are heat exchangers with an infusion chamber in which steam is contained at a temperature of about 140-150°C. The flow of cream to be sterilized is passed through the infusion chamber in the form of a thin film, so as to obtain the maximum heat transfer in the shortest possible time. The advantage of this sterilization system with respect to direct steam injection systems or to systems with plate- or pipe- heat exchangers is that the product does not undergo damage arising from prolonged exposure to high temperatures, and it reduces damage due to turbulence and friction.

There are known methods for producing UHT cream using sterilization by means of infusers, which involve the steps of:
- storing the non-sterilized cream in a receiving tank,
- preheating a flow of non-sterilized cream in a heat exchanger,
- transferring the flow of preheated cream from the heat exchanger to an infuser via a first thermal stop pipe,
- sterilizing the flow of preheated cream within the infuser,
- transferring the flow of sterilized cream from the outlet of said infuser to a vacuum degasser via a second thermal stop pipe,
- degassing the flow of sterilized cream in the vacuum degasser,
- homogenizing the flow of sterilized and degassed cream in a homogenizer, and
- cooling the sterilized, degassed and homogenized cream,

The UHT cream thus obtained is then packaged by means of aseptic packaging machines into *tetra pack* or *bag-in-box* packages.

One common problem of all UHT creams currently available on the market is that, after a relatively short storage period (about 4-6 weeks) of the packaged product, the fat fraction in the cream tends to separate from the liquid fraction, forming a solid precipitate on the bottom of the packages. In these conditions it is difficult to whip the cream. To avoid this problem, thickening or stabilizing agents are added to the UHT creams currently on the market, such as carrageenan, carboxymethylcellulose, alginates, etc.

### Object and summary of the invention

The present invention aims to provide an infusion sterilization method for producing UHT cream with a preservation time that exceeds six months, characterized by a complete stability during storage and in which the separation of the fat fraction does not occur, without requiring any addition of stabilizing or thickening agents.

According to the present invention, this object is achieved by a method having the characteristics forming the subject of claim 1.

The present invention originated from the observation that it is possible to produce UHT cream, devoid of stabilizing or thickening additives, in which the separation of the fat fraction does not occur during long periods of storage, thanks to the modification of some critical parameters of the production method. More precisely, the present invention has identified that the critical parameters in a method for producing UHT cream are the thermal stop times upstream and downstream of the infuser and the temperature of the flow of cream during the homogenization step. It has been observed experimentally that, with thermal stops times having a maximum duration of 5 seconds upstream of the infuser, and a maximum duration of 5 seconds downstream of the infuser, and with a temperature of the flow of cream during the homogenization step of less than 70°C, it is possible to obtain UHT cream with a preservation time of greater than six months and in which the separation of the fat fraction does not occur, without adding any stabilizing agents or thickeners.

### Brief description of the drawings

The present invention will now be described in detail with reference to the attached drawings, given purely by way of non-limiting example, wherein:

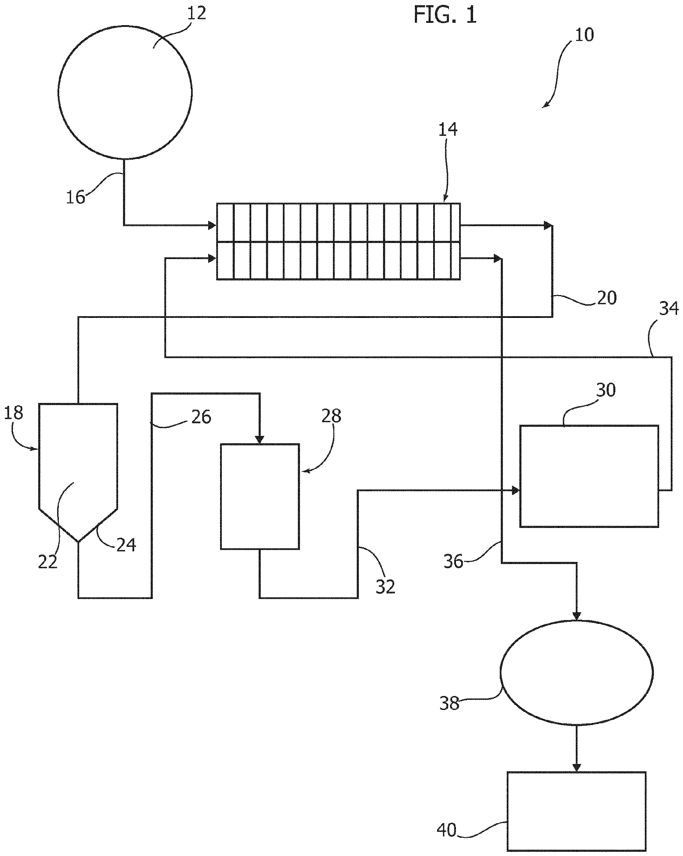

- Figure 1 is a schematic view of a plant for producing UHT cream, and
- Figure 2 is a schematic view illustrating the sequence of steps of a method for producing UHT cream according to the present invention.

### Detailed description

With reference to the figures, numeral 10 indicates a plant for producing UHT cream. The plant 10 comprises a receiving tank 12 in which the cream to be sterilized is stored at a receiving temperature of about 4-5°C. The receiving tank 12 is connected to a preheating heat exchanger 14 via a first pipe 16. The preheating heat exchanger 14 is an indirect fluid-fluid heat exchanger, for example a plate heat exchanger. The preheating heat exchanger 14 performs a pre-heating of the flow of cream from the receiving tank 12 from an initial temperature of about 4-5°C to a preheating temperature of about 75°C.

The flow of preheated cream at the outlet of the preheating heat exchanger 14 is fed to an infuser 18 via a first thermal stop pipe 20. In the first thermal stop pipe 20, the temperature of the flow of cream is kept constant at the outlet value from the heat exchanger 14 (about 75°C). The thermal stop at the outlet of the heat exchanger 14 has the object of stabilizing the proteins. The infuser 18 has an infusion chamber 22 filled with steam at a temperature of 140-150°C. The preheated flow of cream is passed through the infusion chamber 22 in the form of a thin film, formed by a valve located at the inlet of the infuser 18. The thin film of cream passes through the infusion chamber 22 by gravity, and is rapidly heated to the sterilization temperature of about 140°C due to the heat exchange with the saturated steam contained in the infusion chamber 22. The infuser 18 has a collecting wall 24 on which the flow of sterilized cream, which has passed through the infusion chamber 22, collects. The collecting wall 24 is preferably cooled to a temperature of about 120°C to avoid damage to the cream due to contact with excessively hot walls.

At the outlet of the infuser 18, the flow of sterilized cream is collected in a second thermal stop pipe 26 and is fed to a vacuum degasser 28. In the vacuum degasser 28, the steam that entered the flow of cream during the sterilization step within the infuser 18 is extracted by vacuum. Within the vacuum degasser 28, the temperature of the flow of cream decreases due to evaporation of the water contained in the flow of cream.

At the outlet of the vacuum degasser 28, the sterilized and degassed flow of cream is fed to a homogenizer 30 via a second pipe 32. In the homogenizer 30, the flow of cream is subjected to a high pressure compression by means of a volumetric piston pump and is passed at high pressure through throttle valves. The homogenization treatment allows a higher chemical and physical stability of the cream to be obtained.

At the outlet of the homogenizer 30, the flow of cream is cooled to a temperature of about 5°C. Preferably, the cooling of the flow of sterilized, homogenized and degassed cream is obtained by means of the same heat exchanger 14 that carries out the preheating of the flow of cream to be sterilized. The heat that is transferred from the flow of cream from the homogenizer 30 is used to preheat the flow of cream from the receiving tank 12.

The flow of cream at the outlet of the homogenizer 30 is fed to the heat exchanger 14 via a third pipe 34.

The flow of sterilized, degassed and homogenized cream is cooled in the heat exchanger 14 to a temperature of about 5°C and is fed to an aseptic tank 38 via a fourth pipe 36.

The UHT cream thus obtained is fed to packing machines 40, which carry out the packaging of the UHT cream in *tetra pack* or *bag-in-box* packages.

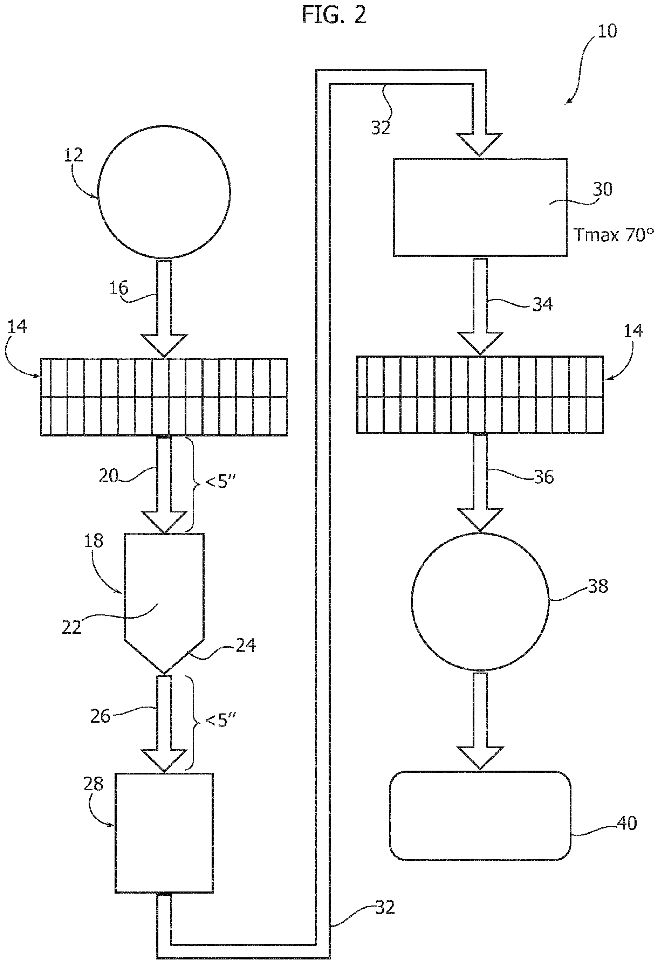

The previously described sequence of operations is illustrated in Figure 2 in a linear flow diagram.

According to the present invention, the step of transferring the flow of cream preheated by the preheating heat exchanger 14 to the infuser 18 via the first thermal stop pipe 20 has a maximum duration of 5 seconds. The step of transferring the flow of sterilized cream from the outlet of the infuser 18 to the vacuum degasser 28 via the second thermal stop pipe 26 has a maximum duration of 5 seconds.

Another characteristic aspect of the present invention is that the homogenization step of the flow of cream in the homogenizer 30 is carried out at a temperature below 70°C. The cooling of the flow of cream down to a temperature lower than 70°C can be obtained by adjusting the operating parameters of the vacuum degasser 28.

Experimental tests have shown that the UHT cream produced under these operating conditions is characterized by a complete stability for a storage period of greater than six months. In particular, the

UHT cream obtained with the method according to the present invention is not subject to separation of the fat fraction for the entire duration of the storage period. The cream obtained by the infusion sterilization method according to the present invention has excellent organoleptic characteristics and is entirely devoid of stabilizing agents or thickeners, which are generally present in creams with expiry dates greater than six months obtained with the methods according to the prior art to prevent the separation of the fat fraction during the storage period.

## Claims

1. A method for producing UHT cream, comprising the steps of:
- storing non-sterilized cream in a receiving tank (12),
- preheating a flow of non-sterilized cream in a preheating heat exchanger (14),
- transferring the flow of preheated cream from said preheating heat exchanger (14) to an infuser (18) via a first thermal stop pipe (20),
- sterilizing the flow of preheated cream in said infuser (18),
- transferring the flow of sterilized cream from the outlet of said infuser (18) to a vacuum degasser (28) via a second thermal stop pipe (26),
- degassing the flow of sterilized cream in said vacuum degasser (28),
- homogenizing the flow of sterilized and degassed cream from said vacuum degasser (28) in a homogenizer (30), and
- cooling the flow of sterilized, degassed and homogenized cream, wherein :
- said step of transferring the flow of preheated cream from said preheating heat exchanger (14) to the infuser (18) via said first thermal stop pipe (20) has a maximum duration of 5 seconds,
- said step of transferring the flow of sterilized cream from said infuser (18) to the vacuum degasser (28) via the second thermal stop pipe (26) has a maximum duration of 5 seconds, and
- said step of homogenizing the flow of sterilized and degassed cream in the homogenizer (30) is carried out at a temperature below 70°C.

2. A method according to claim 1, **characterized in that** said step of cooling the sterilized, degassed and homogenized cream is carried out in the same preheating heat exchanger (14) that carries out preheating of the cream to be sterilized from said receiving tank (12).

## Patentansprüche

1. Verfahren zur Erzeugung von UHT-Sahne, das die Schritte umfasst:
- Lagern von nicht sterilisierter Sahne in einem Aufnahmebehälter (12),
- Vorheizen eines Stroms von nicht sterilisierter Sahne in einem Vorheizwärmetauscher (14),
- Überführen des Stroms von vorgeheizter Sahne von dem Vorheizwärmetauscher (14) zu einer Infusionsvorrichtung (18) über ein erstes Wärmestopprohr (20),
- Sterilisieren des Stroms von vorgewärmter Sahne in der Infusionsvorrichtung (18),
- Überführen des Stroms von sterilisierter Sahne von dem Auslass der Infusionsvorrichtung (18) zu einer Vakuumentgasungsanlage (28) über ein zweites Wärmestopprohr (26),
- Entgasen des Stroms von sterilisierter Sahne in der Vakuumentgasungsanlage (28),
- Homogenisieren des Stroms von sterilisierter und entgaster Sahne aus der Vakuumentgasungsanlage (28) in einem Homogenisator (30) und
- Kühlen des Stroms von sterilisierter, entgaster und homogenisierter Sahne,
wobei
- der Schritt zum Überführen des Stroms von vorgewärmter Sahne von dem Vorheizwärmetauscher (14) zu der Infusionsvorrichtung (18) über das erste Wärmestopprohr (20) eine maximale Dauer von 5 Sekunden hat,
- der Schritt zum Überführen des Stroms von sterilisierter Sahne von der Infusionsvorrichtung (18) zu der Vakuumentgasungsanlage (28) über das zweite Wärmestopprohr (26) eine maximale Dauer von 5 Sekunden hat und
- der Schritt zum Homogenisieren des Stroms von sterilisierter und entgaster Sahne im Homogenisator (30) bei einer Temperatur unter 70° C durchgeführt wird.

2. Verfahren nach Anspruch 1, **dadurch gekennzeichnet, dass** der Schritt zum Kühlen der sterilisierten, entgasten und homogenisierten Sahne in dem gleichen Vorheizwärmetauscher (14) durchgeführt wird, der das Vorheizen der zu sterilisierenden Sahne von dem Aufnahmebehälter (12) ausführt.

## Revendications

1. Procédé de production de crème de longue conservation (UHT), comprenant les étapes consistant :
- à stocker une crème non stérilisée dans un réservoir de réception (12),
- à préchauffer un flux de crème non stérilisée dans un échangeur de chaleur de préchauffage (14),
- à transférer le flux de crème préchauffée dudit échangeur de chaleur de préchauffage (14) vers un infuseur (18) par l'intermédiaire d'un premier tuyau d'interruption thermique (20),
- à stériliser le flux de crème préchauffée dans ledit infuseur (18),
- à transférer le flux de crème stérilisée de l'orifice de sortie dudit infuseur (18) vers un dégazeur sous vide (28) par l'intermédiaire d'un deuxième tuyau d'interruption thermique (26),
- à dégazer le flux de crème stérilisée dans ledit dégazeur sous vide (28),
- à homogénéiser le flux de crème stérilisée et dégazée provenant dudit dégazeur sous vide (28) dans un homogénéisateur (30), et
- à refroidir le flux de crème stérilisée, dégazée et homogénéisée, où
- ladite étape de transfert du flux de crème préchauffée dudit échangeur de chaleur de préchauffage (14) vers l'infuseur (18) par l'intermédiaire dudit premier tuyau d'interruption thermique (20) a une durée maximale de 5 secondes,
- ladite étape de transfert du flux de crème stérilisée dudit infuseur (18) vers le dégazeur sous vide (28) par l'intermédiaire du deuxième tuyau d'interruption thermique (26) a une durée maximale de 5 secondes, et
- ladite étape d'homogénéisation du flux de crème stérilisée et dégazée dans l'homogénéisateur (30) est effectuée à une température inférieure à 70°C.

2. Procédé selon la revendication 1, **caractérisé en ce que** ladite étape de refroidissement de la crème stérilisée, dégazée et homogénéisée est effectuée dans le même échangeur de chaleur de préchauffage (14) qui effectue le préchauffage de la crème à stériliser provenant dudit réservoir de réception (12).
